# EUROPEAN PATENT APPLICATION

(11) **EP 4 494 980 A1**
(43) Date of publication of application: **22.01.2025**
(21) Application number: 24189897.2
(22) Date of filing: 19.07.2024
(51) Int. Cl.: B62D 33/04, B62D 53/06

(54) **SLIDING BOGIE SEMI-TRAILER**

(30) Priority: 20.07.2023 IE S20230285
(71) Applicant: Dennison Trailers Unlimited Company, Naas, Co. Kildare (IE)
(72) Inventor: DENNISON, David, County Kildare (IE); LAMBE, Ronan, County Kildare (IE)
(74) Representative: Schütte, Gearoid

(57) **Abstract**

A sliding bogie semi-trailer (1) has a front trailer part (2) and an associated rear trailer part (3) which are slidably interconnected for movement between an extended position and a closed position. A kingpin (4) is provided on the front trailer part (2) for connection to a fifth wheel coupling of a tractor vehicle in the usual way for towing the semi-trailer (1). The front trailer part (2) has a front load bed (6) and the rear trailer part (3) has a rear load bed (7). The rear load bed (7) is slidable on top of the front load bed (6) for relative sliding movement of the front trailer part (2) and the rear trailer part (3) between an extended position and a closed or collapsed position. In the closed position, the rear load bed (7) locates or nests within the front load bed (6).

## Description

### Introduction

This invention relates to a sliding bogie semi-trailer, and in particular to curtain-sided semi-trailers.

### Background of the Invention

The invention relates to a sliding bogie semi-trailer of the type having a front trailer part and an associated rear trailer part which are slidably interconnected for movement between a closed position and an extended position, the front trailer part having a kingpin for connection to a fifth wheel of a tractor vehicle for towing the semi-trailer, the rear trailer part having an axle with ground-engaging wheels, and the front trailer part having a front load bed and the rear trailer part having a rear load bed. In this type of trailer, generally the rear trailer part slides in under the front trailer part when the semi-trailer is in a collapsed position. However, this construction is not suitable for some trailer types, such as curtain-sided trailers.

The present invention is directed towards overcoming this problem.

### Summary of the Invention

According to the invention, there is provided:
a sliding bogie semi-trailer having a front trailer part and an associated rear trailer part which are slidably interconnected for movement between a closed position and an extended position,
the front trailer part having a kingpin for connection to a fifth wheel of a tractor vehicle for towing the semi-trailer,
the rear trailer part having at least one axle with ground-engaging wheels,
the front trailer part having a front load bed and the rear trailer part having a rear load bed,
characterised in that the rear load bed is slidable on top of the front load bed for relative sliding movement of the front trailer part and the rear trailer part between the closed position and the extended position.

In one embodiment, the rear load bed slides within the front load bed.

In another embodiment, the load beds are slidably interconnected by rollers and associated rails on the load beds.

In another embodiment, a pair of spaced-apart rails are provided at a top of the front load bed and an associated pair of spaced-apart rollers are mounted on the rear load bed projecting downwardly therefrom and engaging the rails.

In another embodiment, the rollers are mounted at a front end of the rear load bed.

In another embodiment, each rail has a bottom flange for engagement by an associated roller which sits and travels thereon, with an upstanding roller retaining web at an inner side of the bottom flange.

In another embodiment, an outer edge of the bottom flange is located beneath an upper flange of a longitudinal beam of the front trailer part.

In another embodiment, a retainer is mounted on one load bed and cooperates with the other load bed to prevent the rear load bed lifting away from the front load bed.

In another embodiment, the retainer comprises a pair of retainer brackets mounted on the rear trailer part and hooking under associated upper flanges of longitudinal beams in the front trailer part, and being freely slidable relative to the upper flanges in a normal operating position.

In another embodiment, the front trailer part and the rear trailer part each comprise a skeletal frame with a pair of spaced-apart longitudinal beams interconnected by a plurality of spaced-apart cross beams.

In another embodiment, the rear trailer part comprises a rear chassis with the rear load bed supported vertically spaced-apart above the rear chassis, and a rear load bed support which is engagable between the rear chassis and the rear load bed intermediate the ends of the rear chassis when the rear chassis is in an extended position.

In another embodiment, the rear load bed support is slidably mounted on top of the rear chassis for movement between a stored position at a rear end of the rear chassis and a central operative position between the ends of the rear chassis.

In a further embodiment, the rear load bed support comprises a slide rail which sits on, spans between, and slidably engages the rear longitudinal l-beams of the rear chassis, a pair of upstanding support feet on the slide rail slidably engaging a bottom of each load bed longitudinal l-beam, a pair of spaced-apart guide rods extending forwardly from the slide rail and slidably and telescopically engaging within a complementary pair of tubular sleeves on the front trailer part.

In another embodiment, a front box frame is mounted on top of the front trailer part and a rear box frame is mounted on top of the rear trailer part, the rear box frame being slidable within the front box frame.

In another embodiment, each box frame is curtain-sided.

In another embodiment, each box frame has rigid sides.

### Brief Description of the Drawings

The invention will be more clearly understood by the following description of some embodiments thereof, given by way of example only, with reference to the accompanying drawings, in which:
Fig. 1 is a perspective view of a sliding bogey semi-trailer according to the invention;
Fig. 2 is another perspective view of the sliding bogie semi-trailer, shown in another position of use;
Fig. 3 is an elevational view of the sliding bogie semi-trailer, shown in an extended position;
Fig. 4 is another elevational view of the sliding bogie semi-trailer, shown in a collapsed or closed position;
Fig. 5 is a perspective view of a rear load bed and rear box frame portion of the sliding bogie semi-trailer;
Fig. 6 is a detail perspective view illustrating engagement between a front load bed and a rear load bed of the sliding bogie semi-trailer;
Fig. 7 is an enlarged detail sectional view showing engagement between the front load bed and the rear load bed of the sliding bogie semi-trailer;
Fig. 8 is an enlarged detail perspective view showing a retainer bracket mounted between load beds of the sliding bogie semi-trailer;
Fig. 9 is an enlarged detail perspective view showing a rear end of the sliding bogie semi-trailer;
Fig. 10 is a side elevational view showing a rear portion of another sliding bogie semi-trailer according to a second embodiment of the invention;
Fig. 11 is a side sectional elevational view of the trailer portion shown in Fig. 10;
Fig. 12 is a perspective view of the trailer portion shown in Fig. 10;
Fig. 13 is another perspective view of the trailer portion shown in Fig. 10;
Fig. 14 is a rear elevational view of the trailer portion shown in Fig. 10; and
Fig. 15 is a detail perspective view of a sliding load bed support forming portion of the trailer portion of Fig. 10.

### Detailed Description of the Preferred Embodiments

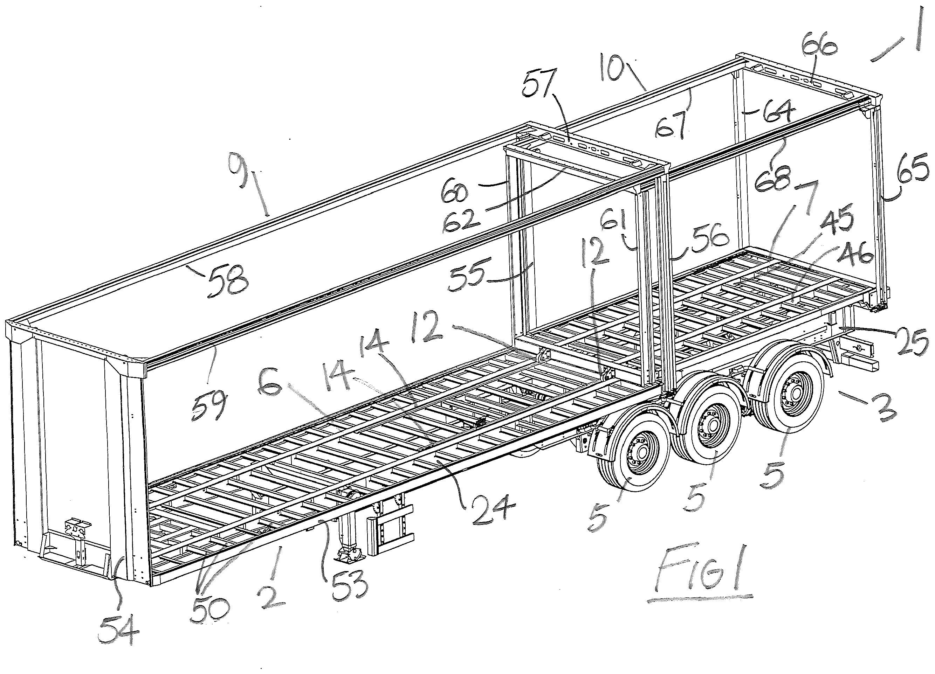

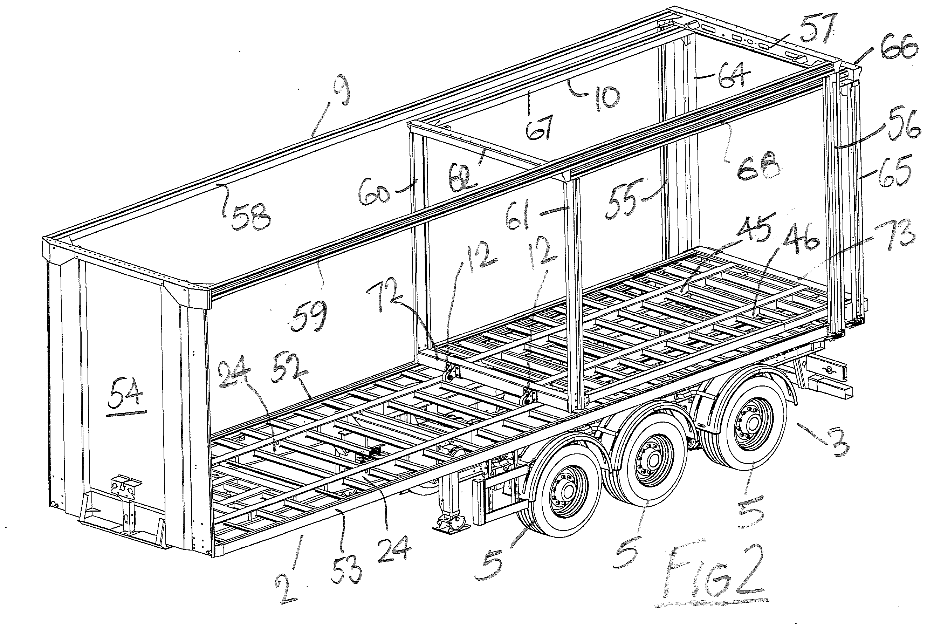

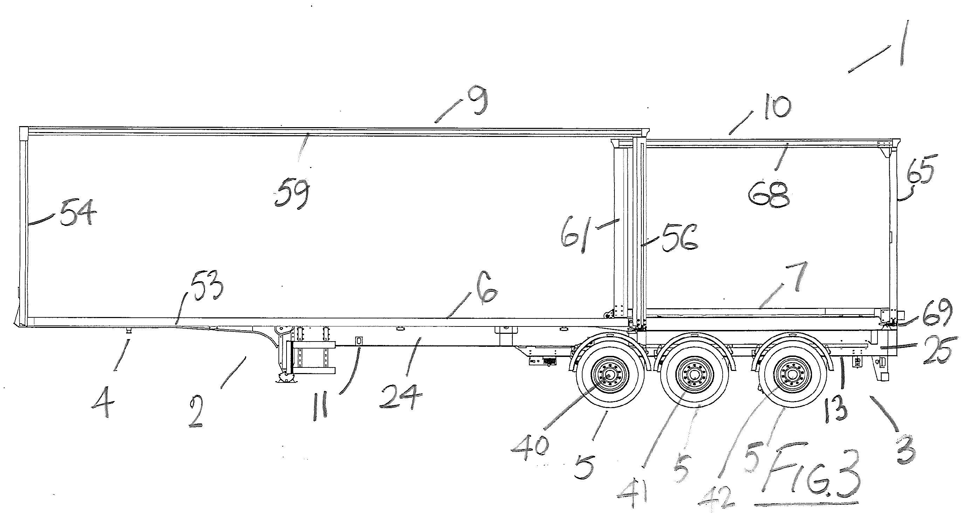

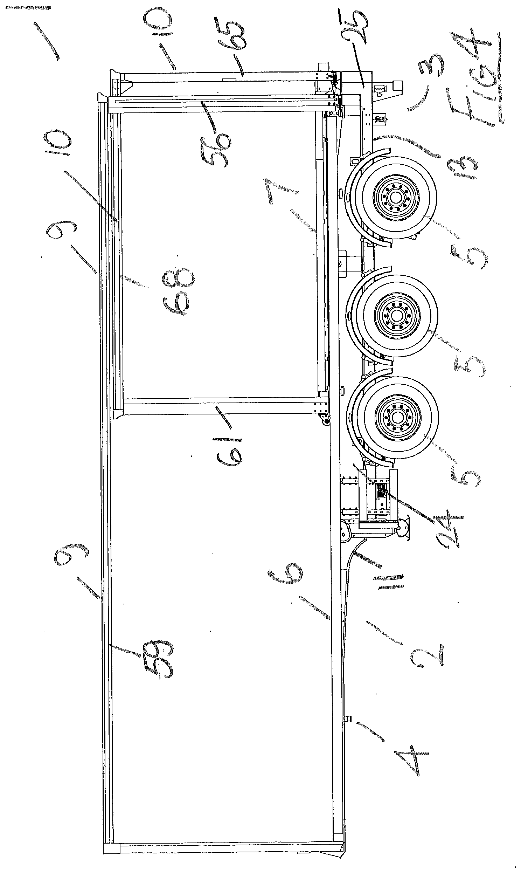

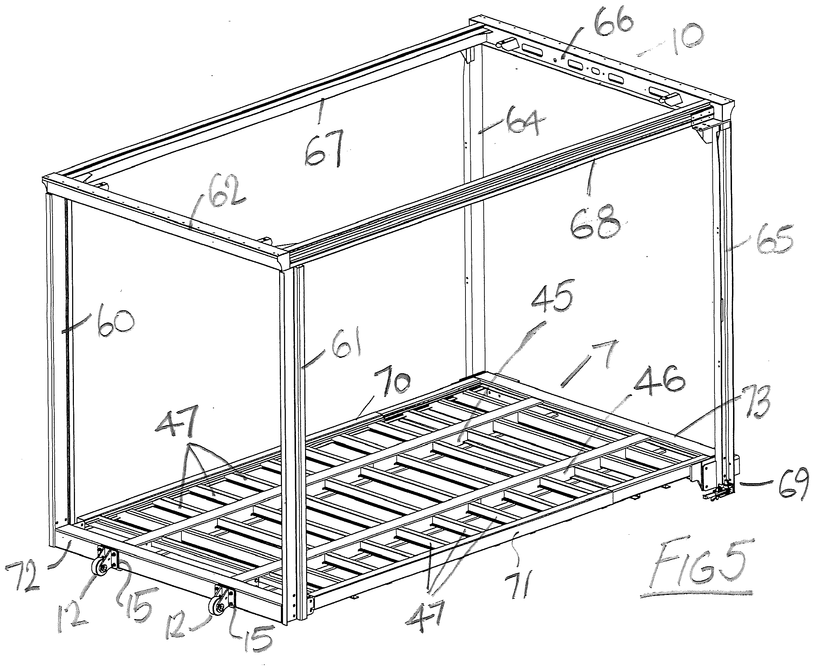

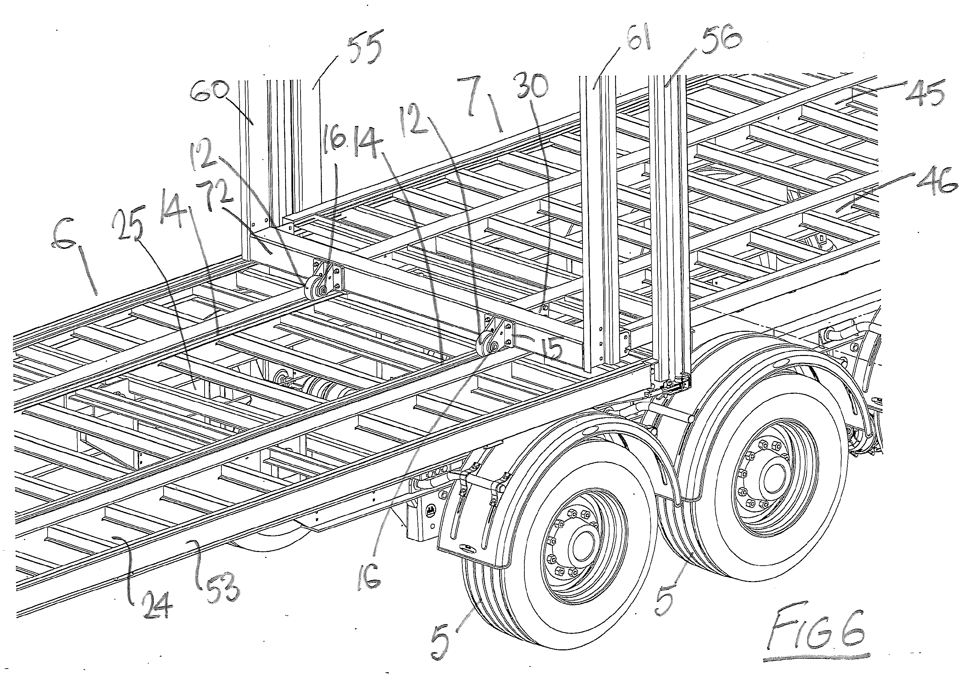

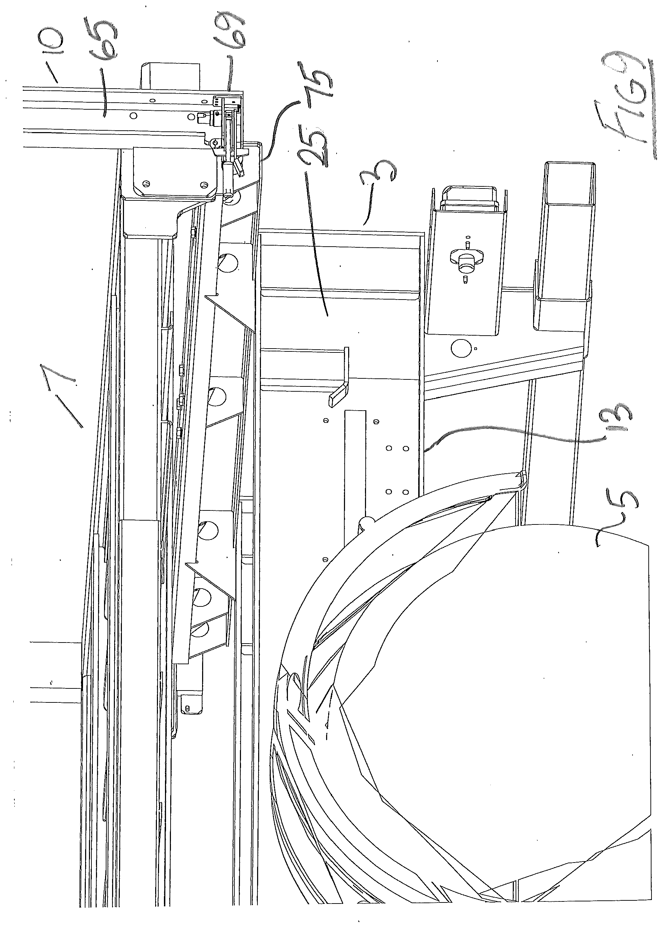

Referring to the drawings, and initially to Fig. 1 to Fig. 9 thereof, there is illustrated a sliding bogie semi-trailer according to the invention, indicated generally by the reference numeral 1. The sliding bogie semi-trailer 1 has a front trailer part 2 and an associated rear trailer part 3 which are slidably interconnected for movement between an extended position, as shown in Fig. 1, and a closed position, as shown in Fig. 2. A kingpin 4 (Fig. 3) is provided on the front trailer part 2 for connection to a fifth wheel coupling of a tractor vehicle in the usual way for towing the semi-trailer 1. In this case, the rear trailer part 3 has three axles with ground engaging wheels 5. The front trailer part 2 has a front.load bed 6 and the rear trailer part 3 has a rear load bed 7. In accordance with the invention, the rear load bed 7 is slidable on top of the front load bed 6 for relative sliding movement of the front trailer part 2 and the rear trailer part 3 between the extended position shown in Fig. 1 and the closed or collapsed position shown in Fig. 2. It will be noted that in the closed position shown in Fig. 2, the rear load bed 7 locates or nests within the front load bed 6.

In this case, the semi-trailer 1 is a curtain-sided trailer and a front box frame 9 of open construction is mounted on the front load bed 6. Likewise, a rear box frame 10 of open construction is mounted on the rear load bed 7 extending upwardly therefrom. It will be noted that the rear box frame 10 is of smaller width and height than the front box frame 9 and thus the rear box frame 10 slides within and nests within the front box frame 9 in the closed position, as shown in Fig. 2.

The load beds 6, 7 are slidably interconnected by rollers 12 and associated rails 14, along which the rollers 12 travel. A pair of spaced-apart rails 14 are provided at a top of the front load bed 6. An associated pair of spaced-apart rollers 12 are mounted on the rear load bed 7, projecting downwardly therefrom at a front of the rear load bed 7 and engaging the rails 14. Each roller 12 is mounted at a front end of the rear load bed 7 by a mounting bracket 15 with a pivot pin 16.

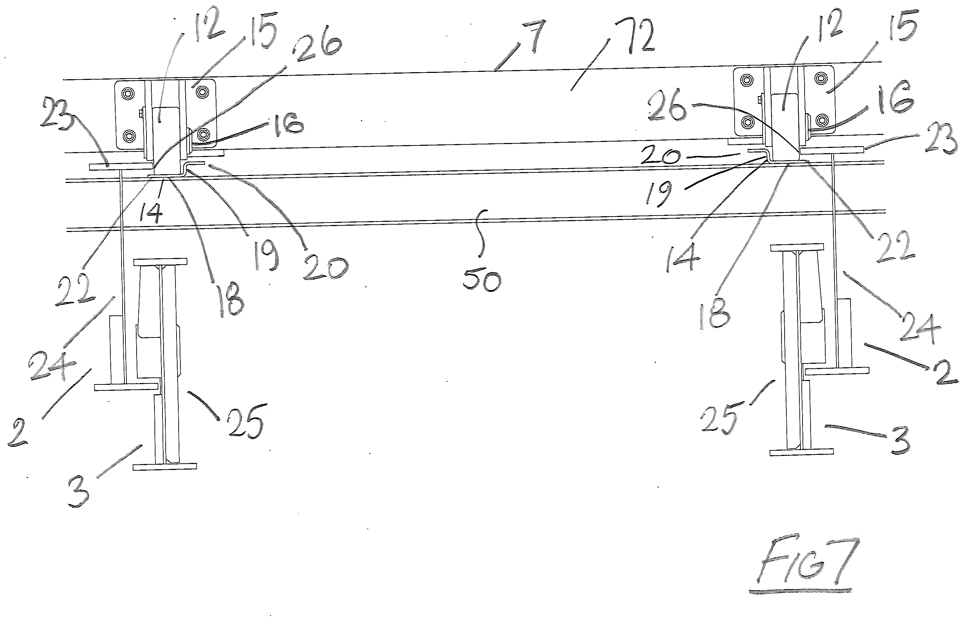

As best seen in Fig. 7, each rail 14 is of Z-section having a bottom flange 18 for engagement by an associated roller 12 which sits and travels thereon. An upstanding roller retaining web 19 projects upwardly at an inner side of the bottom flange 18 to prevent inward lateral movement of the roller 12. A top flange 20 projects laterally inwardly at a top of the web 19. The bottom flange 18 and top flange 20 are substantially parallel and are interconnected by the roller retaining web 19 which is substantially perpendicular to the bottom flange 18 and top flange 20.

It will be noted that an outer edge 22 of each bottom flange 18 is located beneath an upper flange 23 of an associated front longitudinal l-beam 24 of the front trailer part 2. Thus, an inner edge 26 of the upper flange 23 forms a stop to prevent lateral outward movement of the roller 12 and thus the roller 12 is securely retained on the rail 14 between the inner edge 26 and the roller retaining web 19.

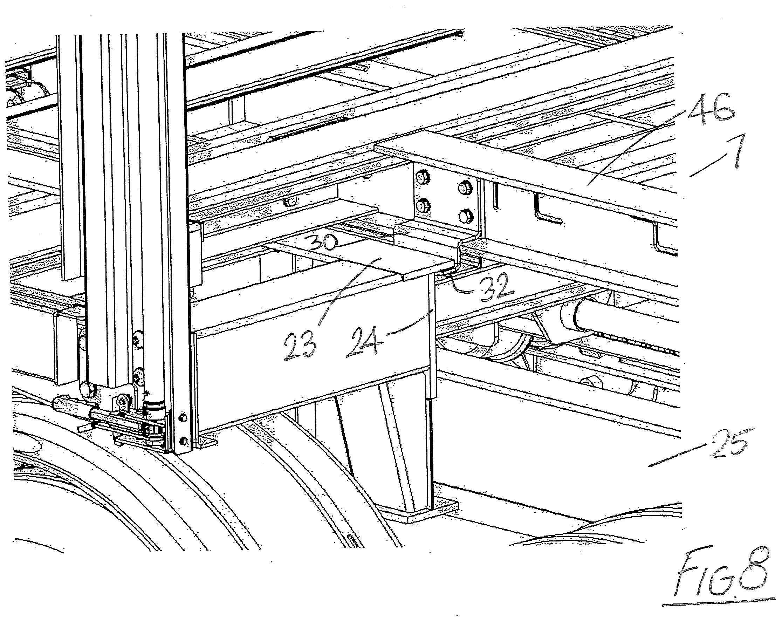

Referring in particular to Fig. 8, a pair of retainer brackets 30 are mounted on the rear load bed 7. Each retainer bracket 30 has a flanged outer end 32 which hooks under the upper flange 23 of an associated front longitudinal l-beam 24 of the front load bed 6. This outer flange 32 freely slides beneath the upper flange 23 in a normal operating position, however, it prevents any lifting of the rear load bed 7 upwardly away from the front load bed 6.

Referring in particular to Fig. 3, the wheels 5 are mounted by axles on the rear trailer part 3. A front axle 40 is a lift axle which may be raised when the rear trailer part 3 is in the collapsed position. A centre axle 41 comprises a fixed axle. A rear axle 42 may comprise a fixed axle or, more preferably, a self-trailing axle. Any other suitable axle arrangement may be provided.

The front trailer part 2 comprises a skeletal front chassis 11 formed by a pair of spaced-apart front longitudinal l-beams 24 interconnected by a plurality of spaced-apart front cross beams 50 extending therebetween and projecting laterally outwardly of each front longitudinal l-beam 24. These cross beams 50 form portion of the front load bed 6.

The rear trailer part 3 has a skeletal rear chassis 13 with a pair of spaced-apart rear longitudinal l-beams 25 spaced to slide within the front longitudinal l-beams 24 of the front trailer part 2. The rear load bed 7 is supported spaced above the rear longitudinal l-beams 25 to enable the rear load bed 7 to slide on top of the front load bed 6 when moving into the closed position, with the rear chassis 13 sliding beneath the front load bed 6. Rollers mounted on the front trailer part 2 roll along top flanges of the rear longitudinal l-beams 25 of the rear trailer part 3 for sliding movement of the trailer parts 2,3 together and apart. To slide the two trailer parts relative to each other only the tractor vehicle used to tow the semi-trailer 1 is required.

The rear load bed 7 has a pair of spaced-apart load bed longitudinal l-beams 45, 46 interconnected by a plurality of spaced-apart load bed cross beams 47 extending therebetween and projecting laterally outwardly of each load bed longitudinal l-beam 45, 46.

The front box frame 9 has bottom side rails 52, 53 at outer ends of the front cross beams 50. A fixed upstanding front panel 54 of the box frame 9 extends upwardly at front ends of the bottom side rails 52, 53. A rear end of the front box frame 9 has upright stanchions 55, 56 interconnected at their upper ends by a crossbar 57. Top side rails 58, 59 extend between the front panel 54 and the stanchions 55, 56. A fixed roof (not shown) closes the top of the front box frame 9, and extends between a top of the front panel 54 and the crossbar 57 and between the top side rails 58, 59. Curtains (not shown) are slidably suspended from the top side rails 58, 59 of the front box frame 9 to close each side of the front box frame 9 and allow access to the front load bed 6 when drawn aside in the usual way.

The rear box frame 10 has upright front stanchions 60, 61 at each side of a front end of the rear load bed 7 interconnected at their upper ends by a front upper crossbar 62. Upright rear stanchions 64, 65 at each side of a rear end of the rear load bed 7 are interconnected by a rear upper crossbar 66. Upper side rails 67, 68 connect between the front upper crossbar 62 and the rear upper crossbar 66. Lower side rails 70, 71 connect between a front lower crossbar 72 and a rear lower crossbar 73 interconnecting lower ends of the stanchions 60, 61 and 64, 65. It will be noted that lower ends 69 of the rear stanchions 64,65 project downwardly of the rear load bed 7 and are interconnected by a support frame 75 which sits on the rear chassis 13 and, together with the rollers 12 at the front end of the rear load bed 7, support the rear load bed 7 spaced above the rear chassis 13. The rear load bed 7 is bolted and fixed to the rear chassis 13.

A fixed roof (not shown) extends between the front and rear upper crossbars 62, 66 and between the upper side rails 67, 68 to close the top of the rear box frame 10. A closure (not shown), such as barn doors or a roller shutter for example, close a rear end of the rear box frame 10 and provide access to an interior. Curtains (not shown) are slidably suspended from each upper side rail 67, 68 to close each side of the rear box frame 10 and allow access to the rear load bed 7 when drawn aside.

It will be noted that instead of curtains, the front box frame 9 and the rear box frame 10 could be provided with rigid sides to provide a box van configuration, possibly with GRP sides. Other variations are also possible, for example a platform trailer with no upper structure.

Although not shown in the drawings, a floor is formed at a top of each load bed 6, 7 to form a substantially flat surface. The floor may conveniently be provided by wooden floorboards or the like. It is also envisaged that seals may in some cases be provided between the front box frame and the rear box frame.

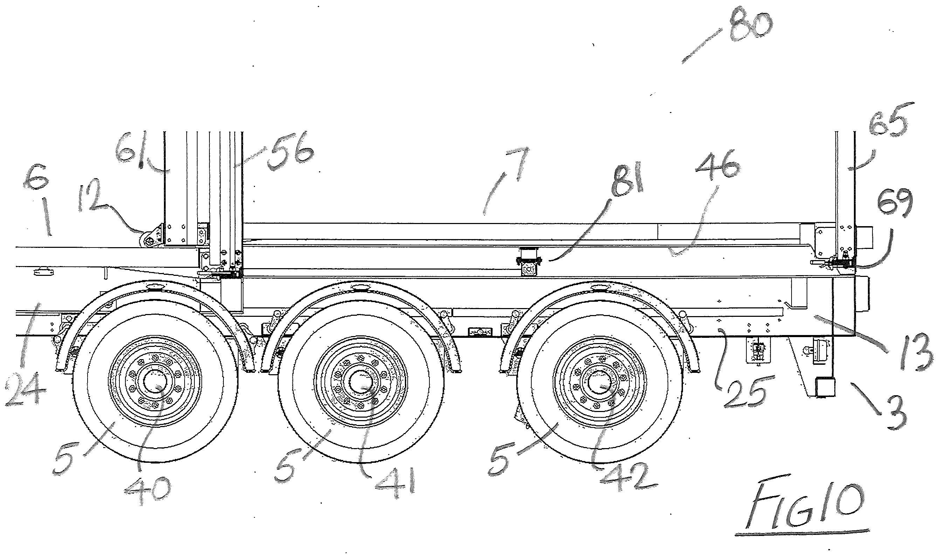

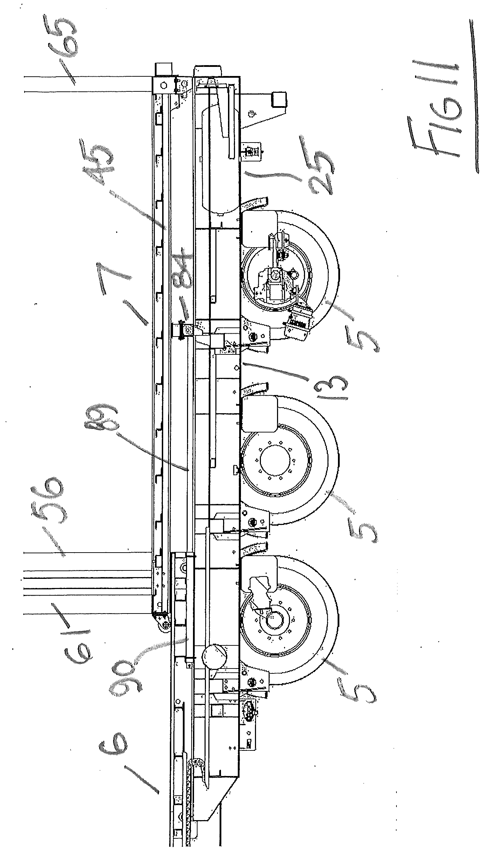

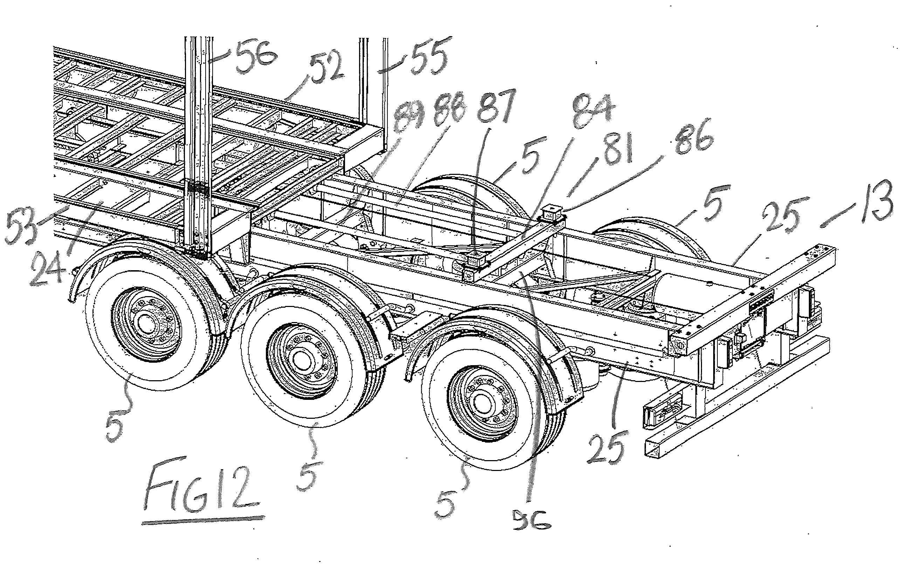

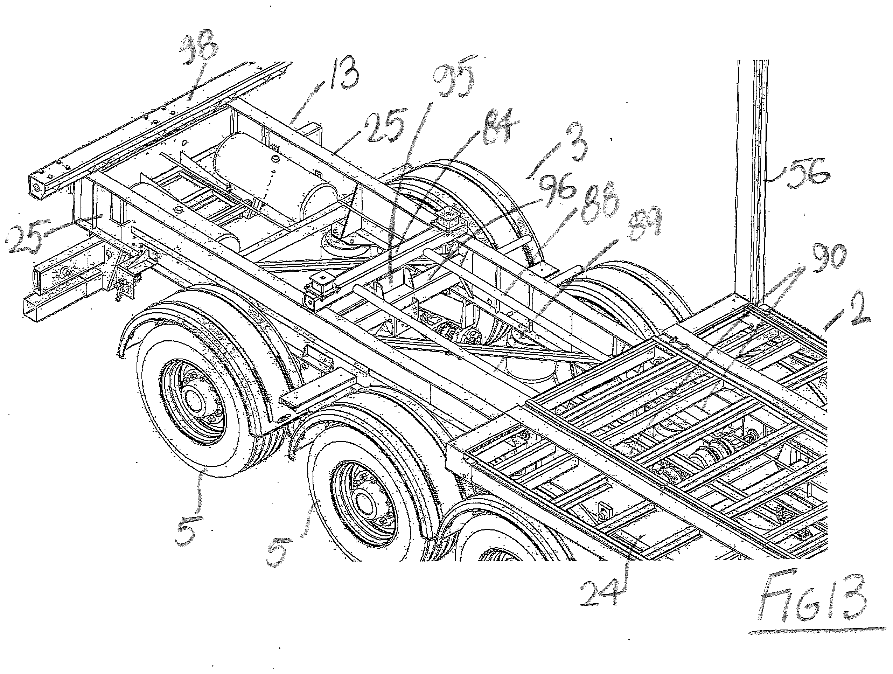

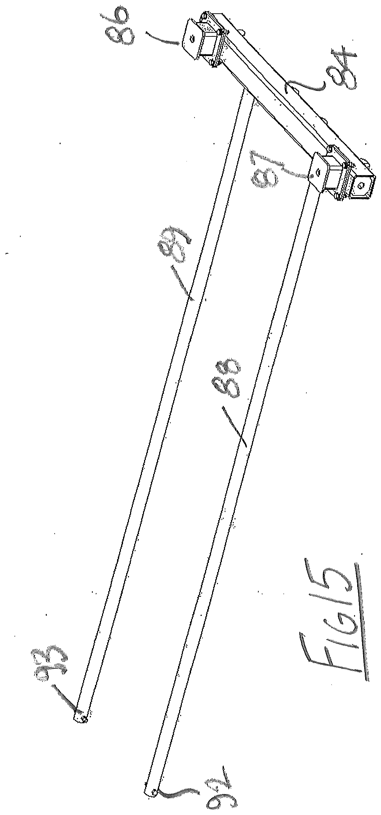

Referring now to Fig. 10 to Fig. 15, there is illustrated portion of another sliding bogie semi-trailer according to a second embodiment of the invention, indicated generally by the reference numeral 80. Parts similar to those described previously are assigned the same reference numerals. In this case, an additional rear load bed support 81 for the rear load bed 7 is provided. Upon movement of the rear trailer part 3 into the extended position, as shown in Fig. 10, the additional rear load bed support 81 is deployed intermediate the ends of the rear load bed 7 to provide additional support at a central portion of the rear load bed 7.

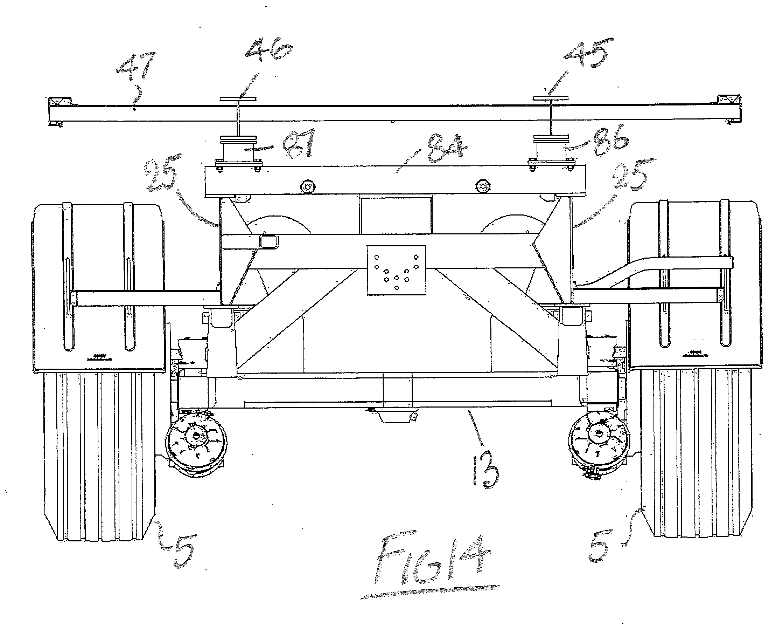

The rear trailer part 3 comprises the rear chassis 13 with the rear load bed 7 supported vertically spaced-apart above the rear chassis 13. The rear load bed support 81 comprises a box-section slide rail 84 which sits on, spans between, and slidably engages top flanges of the pair of rear longitudinal l-beams 25 of the rear chassis 13. A pair of upstanding support feet 86, 87 mounted at opposite ends of the slide rail 84 engage a bottom of each load bed longitudinal l-beam 45, 46 (best seen in Fig. 14). Thus, it will be noted that the slide rail 84 slidably engages both a top of the rear chassis 13 and a bottom of the rear load bed 7.

A pair of spaced-apart guide rods 88, 89 extend forwardly from the slide rail 84 and slidably and telescopically engage within a complementary pair of spaced-apart tubular sleeves 90 on the front trailer part 2. Locking pins 92, 93 at forward free ends of the guide rods 88, 89 prevent the guide rods 88, 89 from pulling out of the tubular sleeves 90.

An upstanding pusher plate 95 on a cross member 96 extending between the rear longitudinal I-beams 25 of the rear chassis 13 is engagable with a front face of the slide rail 84 to push the slide rail 84 out into the deployed position when the rear trailer part 3 is moved out from the collapsed stored position into the extended position.

In use, as the rear trailer part 3 moves from the collapsed stored position on the front trailer part 2 outwardly to the extended in-use position, the plate 95 engages with and pushes the slide rail 84 rearwardly on top of the rear longitudinal l-beams 25 to deploy the slide rail 84 centrally on the rear chassis 13 and centrally beneath the rear load bed 7. When the rear trailer part 3 is subsequently retracted under the front trailer part 2, a cross rail 98 at a rear end of the rear chassis 13 will engage and push the slide rail 84 forwardly as it moves forward against a rear end of the front trailer part 2.

It will be noted that the trailer 1, 80 of the invention extends from 10m to 13.6m and is usable in both short and extended length. That is, the trailer 1, 80 is usable as two quite different trailers, for different applications.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A sliding bogie semi-trailer (1) having a front trailer part (2) and an associated rear trailer part (3) which are slidably interconnected for movement between a closed position and an extended position,
the front trailer part (2) having a kingpin (4) for connection to a fifth wheel of a tractor vehicle for towing the semi-trailer (1),
the rear trailer part (3) having at least one axle (40, 41, 42) with ground-engaging wheels (5),
the front trailer part (2) having a front load bed (6) and the rear trailer part (3) having a rear load bed (7),
**characterised in that** the rear load bed (7) is slidable on top of the front load bed (6) for relative sliding movement of the front trailer part (2) and the rear trailer part (3) between the closed position and the extended position.

2. The semi-trailer (1) as claimed in claim 1, wherein the rear load bed (7) slides within the front load bed (6).

3. The semi-trailer (1) as claimed in claim 1 or claim 2, wherein the load beds (6, 7) are slidably interconnected by rollers (12) and associated rails (14) on the load beds (6, 7).

4. The semi-trailer (1) as claimed in claim 3, wherein a pair of spaced-apart rails (14) are provided at a top of the front load bed (6) and an associated pair of spaced-apart rollers (12) are mounted on the rear load bed (7) projecting downwardly therefrom and engaging the rails (14).

5. The semi-trailer (1) as claimed in claim 4, wherein the rollers (12) are mounted at a front end of the rear load bed (7).

6. The semi-trailer (1) as claimed in claim 4 or claim 5, wherein each rail (14) has a bottom flange (18) for engagement by an associated roller (12) which sits and travels thereon, with an upstanding roller retaining web (19) at an inner side of the bottom flange (18).

7. The semi-trailer (1) as claimed in claim 6, wherein an outer edge of the bottom flange (18) is located beneath an upper flange (20) of a longitudinal beam (24) of the front trailer part (2).

8. The semi-trailer (1) as claimed in any one of the preceding claims, wherein a retainer (30) is mounted on one load bed (6, 7) and cooperates with the other load bed (6, 7) to prevent the rear load bed (7) lifting away from the front load bed (6).

9. The semi-trailer (1) as claimed in claim 8, wherein the retainer comprises a pair of retainer brackets (30) mounted on the rear trailer part (3) and hooking under associated upper flanges (23) of longitudinal beams (24) in the front trailer part (2), and being freely slidable relative to the upper flanges (23) in a normal operating position.

10. The semi-trailer (1) as claimed in any one of the preceding claims, wherein the front trailer part (2) and the rear trailer part (3) each comprise a skeletal frame with a pair of spaced-apart longitudinal beams (24, 25) interconnected by a plurality of spaced-apart cross beams.

11. The semi-trailer (80) as claimed in any one of the preceding claims, wherein the rear trailer part (3) comprises a rear chassis (13) with the rear load bed (7) supported vertically spaced-apart above the rear chassis (13), and a rear load bed support (81) which is engagable between the rear chassis (13) and the rear load bed (7) intermediate the ends of the rear chassis (13), when the rear chassis (13) is in an extended position.

12. The semi-trailer (80) as claimed in claim 11, wherein the rear load bed support (81) is slidably mounted on top of the rear chassis (13) for movement between a stored position at a rear end of the rear chassis (13) and a central operative position between the ends of the rear chassis (13).

13. The semi-trailer (80) as claimed in claim 11 or claim 12, wherein the rear load bed support (81) comprises a slide rail (84) which sits on, spans between and slidably engages the rear longitudinal l-beams (25) of the rear chassis (13), a pair of upstanding support feet (86, 87) on the slide rail (84) slidably engaging a bottom of each load bed longitudinal l-beam (45, 46) and a pair of spaced-apart guide rods (88, 89) extending forwardly from the slide rail (84) and slidably and telescopically engaging within a complementary pair of tubular sleeves (90) on the front trailer part (2).

14. The semi-trailer (1, 80) as claimed in any one of the preceding claims, wherein a front box frame is mounted on top of the front trailer part (2) and a rear box frame is mounted on top of the rear trailer part (3), the rear box frame being slidable within the front box frame.

15. The semi-trailer (1, 80) as claimed in claim 14, wherein each box frame is curtain-sided, or each box frame has rigid sides.
